# EUROPEAN PATENT SPECIFICATION

(11) **EP 1 354 691 B1**
(45) Date of publication and mention of the grant of the patent: **12.04.2006**
(21) Application number: 03013502.4
(22) Date of filing: 02.01.2001
(51) Int. Cl.: B29C 49/00, B65D 75/32

(54) **Method and apparatus for sheet blow molding**
Verfahren und Vorrichtung zum Blasformen von Folien
Procédé et dispositif de moulage par soufflage des feuilles

(30) Priority: 31.12.1999 IT MO990288
(43) Date of publication of application: 22.10.2003
(62) Divisional of application: 01900125.4
(73) Proprietor: ELOPAK SYSTEMS AG, 8152 Glattbrugg (CH)
(72) Inventor: Bianchini, Alessandro, 41010 Cognento (Modena) (IT)
(74) Representative: Provvisionato, Paolo

(56) References cited:
- EP-A- 0 322 199
- EP-A- 0 328 245
- EP-A- 0 692 364
- EP-A- 0 692 428
- WO-A-94/08852
- WO-A-98/13191
- WO-A-98/17546
- WO-A-98/23304
- WO-A-99/23966
- US-A- 2 991 500
- US-A- 4 956 212
- US-A- 5 346 735
- US-A- 5 518 790

## Description

WO-94/08852 discloses a forming system in which there are arranged in succession a preheating station for preheating of sheet material, a welding station, in which opposing regions of the sheet material are joined along intended outlines of containers so as to define pouches which are interconnected by conduits through which a forming fluid can be injected, a forming station, in which the forming fluid is injected into the pouches in order to expand the pouches up to form therefrom groups of containers, the formed containers being joined together by undeformed portions of the sheet material, a cutting station in which each group of containers is severed from the sheet material and advanced through a filling station, in which product is introduced into the formed containers through openings thereof, a sealing station in which the containers are sealed by closing said openings, and a cutting station in which the formed and sealed containers are cut out from the undeformed sheet material.

EP-0692364 discloses a similar forming system in which at least one further sealing and forming station is interposed between the welding station and the forming station, which allows more gradual forming of containers.

Peelable containers are known, comprising each a bulged wall joined together along its outline with a planar wall, the planar wall comprising a barrier sheet peelably detachable from a permeable sheet welded to said outline. Thus, when the barrier sheet is peelably removed from said permeable sheet, a content of the container can be emanated in the ambience atmosphere through the permeable sheet.

In the peelable containers according to the prior art, removal of the barrier sheet implies gripping one external portion thereof and tearing away the barrier sheet from the permeable sheet. However, gripping of the barrier sheet is difficult to achieve because the barrier sheet and the permeable sheet adhere to each other.

WO-A-9813191 discloses a method for forming containers, comprising heating sheet material, joining a first web and a second web of said sheet material along intended outlines of containers so as to form pouches bounded by said intended outlines and conduit means leading out into said pouches, said conduit means being suitable to inject therethrough a forming fluid, forming said containers by expanding said pouches by injecting said forming fluid through said conduit means. It also discloses an apparatus for forming containers, comprising indexing a first web and a second web of sheet material through a heating station and through a welding-and-forming station in which opposing portions of said first web and second web are joined together by welding-and-forming means along intended outlines of containers so as to form pouches and conduit means leading out into said pouches to inject therein a forming fluid and form said containers by expanding said pouches.

WO-A-9923966 concerns a flexible container for the storage and control of medical solutions, which comprises two sheets of flexible material sealed along a common peripheral edge. This seal is significantly strong so as not to be ruptured by hydraulic pressures applied by manipulating the container. The container further comprises an outlet port from which the content is distributed, and is partitioned into three closed and separate compartments storing different substances, e.g. a liquid and a medicament, which have to be mixed before being distributed. The object of WO-A-9923966 is to improve the opening of separable compartment closures by providing weak, peelable seals, that may be easily broken by hydraulic pressure applied when manipulating the container.

Welding-and-forming means provided with recess means for receiving regions of sheet material externally of inteded oulines of containers, wherein a first web is distanced apart from a second web, is known from US-A-2991500.

An object of the invention is to improve forming of containers.

Another object of the invention is to improve opening peelability of containers.

According to a first aspect of the invention, there is provided a method for forming containers in accordance with claim 1.

According to a second aspect of the invention, there is provided apparatus for forming containers in accordance with claim 9.

Owing to these aspects of the invention, it is possible to work webs of different materials, without incurring the risk that excessive heat damages any of the webs.

In this way, containers having a facilitating peelability zone are formed in a particularly simple and economic way.

The invention can be better understood and carried out with reference to the drawings attached which show exemplifying and not restrictive versions thereof, wherein:
Figure 1 is a front schematic view of a machine for forming containers from sheet material;
Figure 2 is a section taken along the plane 11-11 of Figure 1;
Figure 3 is a highly enlarged and broken section of a version of the injection nozzles of the forming fluid;
Figure 4 is a section as Figure 2, but relative only to the sealing and forming station with mould in a closing position;
Figure 5 is a front view of a peelable container;
Figure 6 is highly enlarged and broken section along the plane VI-VI of Figure 5;
Figure 7 is a section as Figure 6, but relative to a partially open container, i. e. an activated container;
Figure 8 is a front view of a mould part for peelable containers;
Figure 9 is a view as Figure 8, but relative to a variant of the injection means of the forming fluid;
Figure 10 is a highly enlarged and broken section taken along the plane X-X of

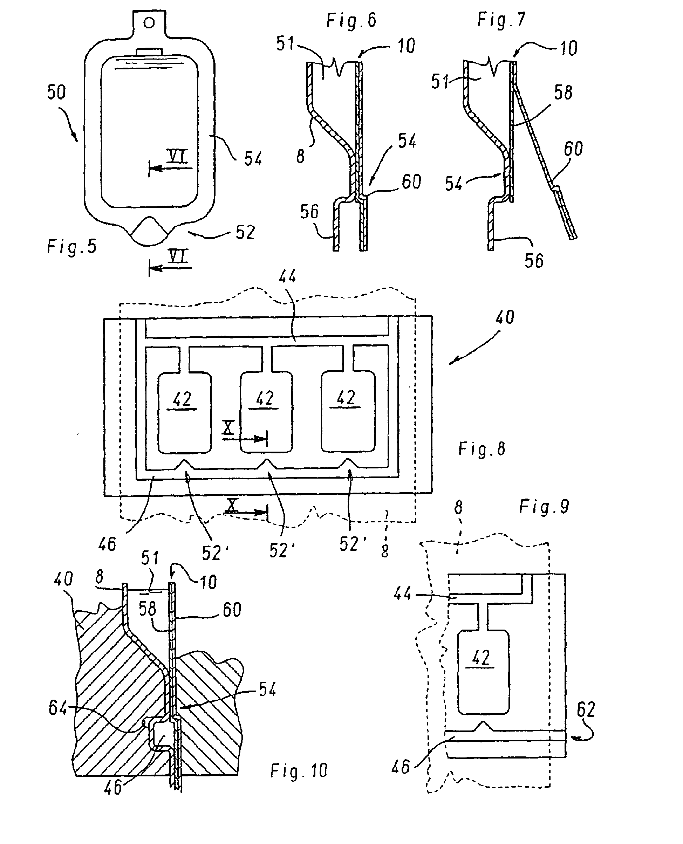

Figure 8 relative to a complete mould.

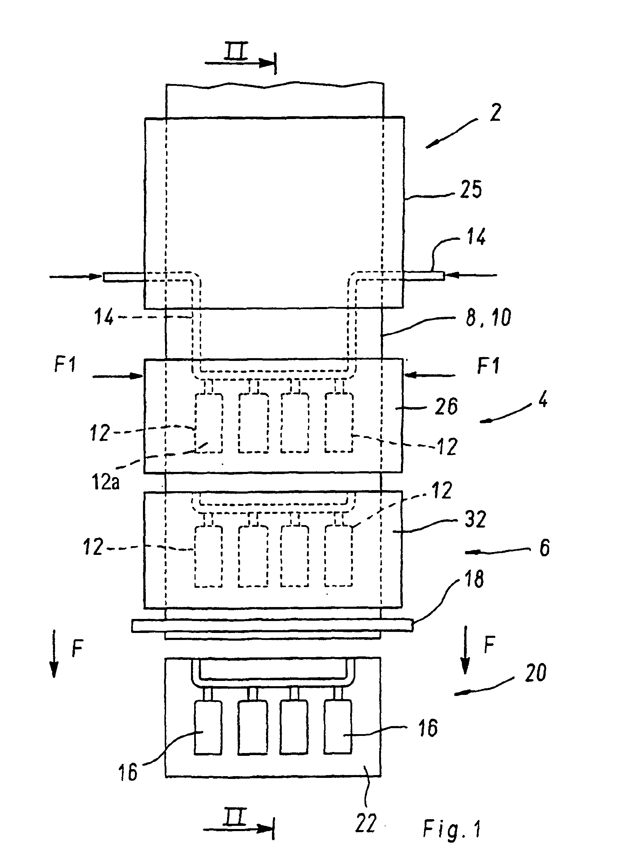

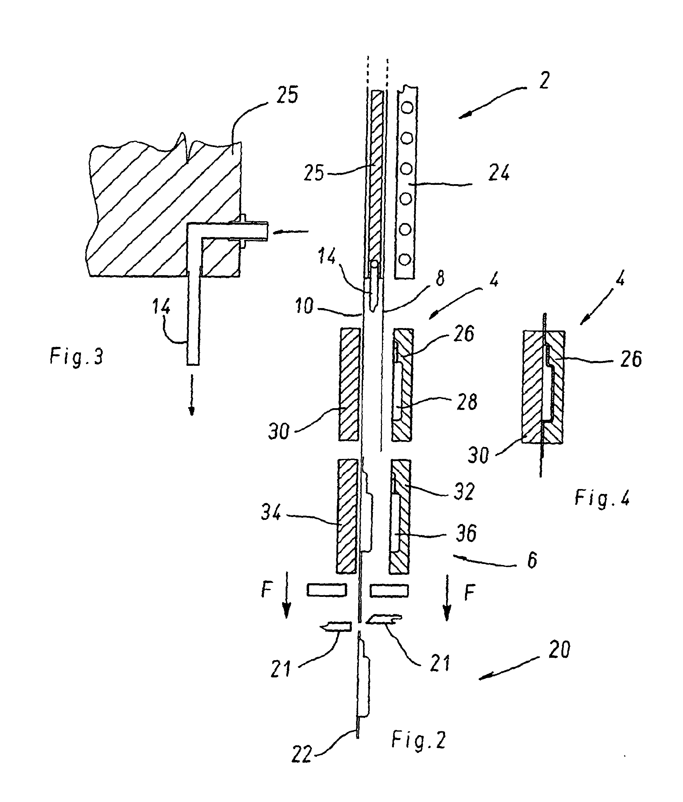

As shown in Figures 1, 2 and 3, a machine for forming containers comprises in sequence: a heating station 2 wherein a first web 8 of thermoformable sheet material and a second web 10 of sheet material (not necessarily thermoformable) are heated, a welding-and-forming station 4, in which the first web 8 and the second web 10 are welded along intended outlines 12 of precursor containers, or pouches, 12a and a forming fluid is injected through injectors 14 in order to form containers defined by the contours 12 and a stabilizing station 6 wherein the shape of the formed containers 16 is stabilized.

Downstream of the stabilizing station 6, advancing means 18 is provided in order to advance by steps the first sheet 8 and the second sheet 10 from the stations 2,4 and 6 toward a cutting station 20 wherein groups 22 of formed containers 16 are separated from the sheets 8,10 by cutting means 21.

The heating station 2 includes a heating unit 24, such as a heating lamp unit, facing the first web 8 and a screen 25 disposed between the first web 8 and the second web 10. In this way, the first web 8 is more heated than the second web 10 and, if the first web is constituted by plastic material, it will attain a temperature very close to the softening temperature (nearly about some hundred centigrade degrees). Instead the second sheet 10 is only slightly heated, for instance nearly about to a temperature of some ten centigrade degrees.

In the sealing-and-forming station 4, a first mould portion 26 is provided having hollows 28 suitable to receive corresponding regions of the first sheet 8 when forming fluid is injected through the injectors 14, the injectors 14 extending internally into the screen 25 so as to project from it toward the sealing and forming station 4 and laterally so as be connected with ducts of pressurized air, not shown.

In a version not shown, the injectors can also be inserted laterally between the first mould portion 26 and a second mould portion 30 cooperating with the first mould portion 26 in the position shown by arrow F 1.

The first mould portion 26 is cooled, so that, when the material of the first web 8, which is deformed by the action of the forming fluid, comes into contact with the cold walls of the first portion 26 of mould, it cools, assuming thereby final shape and dimensions.

The second mould portion 30 is substantially plane, i. e. without the hollow opposed to the first portion 26 of mould, so that, when the first mould portion 26 and the second mould portion 28 are moved in a closing position, they lock between them corresponding portions of the first web 8 and of the second web 10.

The second mould portion 30 is heated, so that the second sheet 10, which lies at a relatively low temperature, is heated up to a temperature suitable to allow to seal it to the first web 8 along the intended outlines 12.

The stabilizing station 6 includes a further first mould portion 32 and a further second mould portion 34, structurally analogous to the first mould portion 26 and to the second mould portion 30, respectively.

However, one or both of the further first mould portion 32 and the further second mould portion 34 can be cooled.

The further second mould portion 34 is not heated, because this might damage the effectiveness of the weld along the intended contours 12 which is carried out at the welding-and-forming station 4.

The further second mould portion 32 is provided with further hollows 36 slightly greater than the hol lows 28 of the first mould portion 28 to stabilize the final shape and dimension of the formed containers.

As seen in Figure 8, a mould 40 of a version of the welding-and-forming station 4 has depressions 42 for receiving the material of the first web 8 deformed by the forming fluid and shows also grooves 44 interconnecting the depressions 42, forming canalizations for the forming fluid defined by the first web 8 and the second web 10. Furthermore the grooves 44 can extend up to define further grooves 46 suitable to form in the first web 8 marginal regions 52'of external edge of container distanced apart from corresponding regions of the second web 10.

In this way, it is possible to manufacture a container 50 as shown in the Figure 5, wherein a marginal region 52 of a peripheral weld 54 of a container 50 containing a liquid 51 shows a first edge zone 56 of the first web 8 formed so as to lie substantially detached from the corresponding second edge zone 58 of the second web 10. In this way, when a peelable container has to be activated, in order to cause a permeable film 58 to transpire, so as it can emanate volatile substances in the surrounding environment, it is sufficient to grip one of the edges 56,58 at the marginal region 52 and to remove a barrier layer 60 initially associated to the permeable film 58.

Advantageously, also the second edge zone 58 of the second sheet 10 can be fully formed so as to increase distance from the first edge zone 56 of the first sheet 8.

As shown in Figure 9, the further grooves 46 can be fed with pressurized forming fluid independently, i. e. through inlet 62.

As shown in Figure 10, in order to make easier forming of the edge 56 of the first sheet 8, it is possible to obtain an additional recess 64 in the further grooves 46 at a region designed to form a portion of the edge 56 closer to the weld 54.

## Claims

1. Method for forming containers, comprising indexing a first web (8) and a second web (10) of a sheet material, heating (2) said sheet material, joining said first web (8) and a said second web (10) of said sheet material along intended outlines (12) of containers (16,50) so as to form pouches (12a) bounded by said intended outlines and conduit means (44) leading out into said pouches (12a), said conduit means being suitable to inject therethrough a forming fluid, forming said containers (16) by expanding said pouches (12a) by injecting said forming fluid through said conduit means (44),
**characterized in that** said expanding comprises expanding outer regions of said sheet material externally of said intended outlines (12) forming in each container marginal region (52) of external edge in which said first web (8) and said second web (10) are spaced apart to each other and being adapted to be gripped at said marginal region (52) for peeling said containers.

2. A method according to claim 1, wherein said joining further comprises forming further conduit means (46) leading out into said outer regions.

3. Method according to claim 1 or 2, wherein said heating comprises selectively heating said first web (8) more than said second web (10).

4. Method according to claim 3, wherein said selectively heating comprises interposing screen means (25) between said first web (8) and said second web (10).

5. Method according to any one of claims 1 or 2, wherein said heating comprises heating said second web (10) after heating said first web (8).

6. Method according to claim 5, wherein said heating said second web (10) takes place together with said joining.

7. Method according to any one of claims 1 to 6, wherein said expanding takes place while said first web (8) is cooled.

8. Method according to any one of claims 1 to 7, and further comprising, after said expanding, stabilizing said containers (16).

9. Apparatus for forming containers, comprising indexing a first web (8) and a second web (10) of sheet material through a heating station (2) and through a welding-and-forming station (4) in which opposing portions of said first web (8) and second web (10) are joined together by welding-and-forming means (26,30) along intended outlines (12) of containers so as to form pouches (12a) and conduit means (44) leading out into said pouches (12a) to inject therein a forming fluid and form said containers (16) by expanding said pouches (12a), **characterized in that** said welding-and-fonning means (26,30) is provided with recess means for receiving regions of said sheet material externally of said intended outlines (12), in said regions said first web (8) being distanced apart from said second web (10) so as to define opening means (52) of said container (50).

10. Apparatus according to claim 9, wherein said welding-and-forming means (26,30) defines further conduit means (46) in said sheet material, said further conduit means (46) leading out into said regions so as to form said regions when said forming fluid is injected.

11. Apparatus according to claim 9 or 10, wherein said heating station (2) comprises selective heating means (24,25) arranged to selectively heat said first web (8) more than said second web (10).

12. Apparatus according to claim 11, wherein said selective heating means comprises screen means (25) interposed between said first web (8) and said second web (10).

13. Apparatus according to any one of claims 9 to 12, and further comprising further heating means (30) in said welding-and-forming means (26, 30) at said welding-and-forming station (4), said further heating means (30) being arranged such as to heat said second web (10).

14. Apparatus according to any one of claims 9 to 13, wherein said welding-and-forming means (26,30) are provided with cooling means (26) for cooling said first web (8) at said welding-and-forming station (4).

15. Apparatus according to any one of claims 9 to 14, and further comprising, downstream of said welding-and-forming station, a shape stabilizing station (6).

## Patentansprüche

1. Verfahren zum Formen von Behältern, mit den Schritten: Vorrücken einer ersten Bahn (8) und einer zweiten Bahn (10) aus Flachmaterial, Erwärmen (2) des Flachmaterials, Verbinden der ersten Bahn (8) und der zweiten Bahn (10) des Flachmaterials entlang bestimmter Umrisslinien (12) von Behältern (16, 50), um Taschen (12a), die durch die bestimmten Umrisslinien begrenzt sind, und Kanalmittel (44) zu formen, die in die Taschen (12a) führen, wobei die Kanalmittel dazu geeignet sind, ein Formungsfluid durch diese hindurch zu injizieren, Formen der Behälter (16) durch Aufweiten der Taschen (12a) durch Injizieren des Formungsfluids durch die Kanalmittel (44), **dadurch gekennzeichnet, dass** das Aufweiten ein Aufweiten äußerer Bereiche des Flachmaterials außerhalb der bestimmten Umrisslinien (12) umfasst, die in jedem Behälter einen Randbereich (52) einer äußeren Kante bilden, in dem die erste Bahn (8) und die zweite Bahn (10) voneinander beabstandet sind und der dazu ausgelegt ist, an dem Randbereich (52) zum Abschalen der Behälter gefasst zu werden.

2. Verfahren nach Anspruch 1, wobei das Verbinden weiterhin ein Formen weiterer Kanalmittel (46) umfasst, die in die äußeren Bereiche führen.

3. Verfahren nach Anspruch 1 oder 2, wobei das Erwärmen wahlweise ein stärkeres Erwärmen der ersten Bahn (8) als der zweiten Bahn (10) umfasst.

4. Verfahren nach Anspruch 3, wobei das wahlweise Erwärmen ein Einbringen von Abschirmmitteln (25) zwischen die erste Bahn (8) und die zweite Bahn (10) umfasst.

5. Verfahren nach einem der Ansprüche 1 oder 2, wobei das Erwärmen ein Erwärmen der zweiten Bahn (10) nach dem Erwärmen der ersten Bahn (8) umfasst.

6. Verfahren nach Anspruch 5, wobei das Erwärmen der zweiten Bahn (10) zusammen mit dem Verbinden erfolgt.

7. Verfahren nach einem der Ansprüche 1 bis 6, wobei das Aufweiten erfolgt, während die erste Bahn (8) abgekühlt wird.

8. Verfahren nach einem der Ansprüche 1 bis 7, weiterhin mit dem Schritt: Stabilisieren der Behälter (16) nach dem Aufweiten.

9. Vorrichtung zum Formen von Behältern, mit einem Vorrücken einer ersten Bahn (8) und einer zweiten Bahn (10) aus Flachmaterial durch eine Erwärmungsstation (2) und durch eine Schweiß- und Formungsstation (4), in der gegenüberliegende Abschnitte der ersten Bahn (8) und der zweiten Bahn (10) durch Schweiß- und Formungsmittel (26, 30) entlang bestimmter Umrisslinien (12) von Containern miteinander verbunden werden, um Taschen (12a) und Kanalmittel (44) zu formen, die in die Taschen (12a) führen, um ein Formungsfluid dort hinein zu injizieren, und um die Behälter (16) durch Aufweiten der Taschen (12a) zu formen, **dadurch gekennzeichnet, dass** die Schweiß und Formungsmittel (26, 30) mit Aussparungsmitteln zum Aufnehmen von Bereichen des Flachmaterials außerhalb der bestimmten Umrisslinien (12) versehen ist, wobei die erste Bahn (8) in diesen Bereichen von der zweiten Bahn (10) beabstandet ist, um so Mittel (52) zum Öffnen der Behälter (50) zu definieren.

10. Vorrichtung nach Anspruch 9, wobei die Schweiß- und Formungsmittel (26, 30) weitere Kanalmittel (46) in dem Flachmaterial definieren, wobei die weiteren Kanalmittel (46) in die Bereiche führen, um diese Bereiche zu formen, wenn das Formungsfluid injiziert wird.

11. Vorrichtung nach Anspruch 9 oder 10, wobei die Erwärmungsstation (2) selektive Erwärmungsmittel (24, 25) aufweist, die dazu ausgelegt sind, die erste Bahn (8) selektiv stärker als die zweite Bahn (10) zu erwärmen.

12. Vorrichtung nach Anspruch 11, wobei die selektiven Erwärmungsmittel Abschirmmittel (25) aufweisen, die zwischen der ersten Bahn (8) und der zweiten Bahn (10) eingebracht sind.

13. Vorrichtung nach einem der Ansprüche 9 bis 12, weiterhin mit weiteren Erwärmungsmitteln (30) in den Schweiß- und Formungsmitteln (26, 30) an der Schweiß- und Formungsstation (4), wobei die weiteren Erwärmungsmittel (30) dazu ausgelegt sind, die zweite Bahn (10) zu erwärmen.

14. Vorrichtung nach einem der Ansprüche 9 bis 13, wobei die Schweiß- und Formungsmittel (26, 30) mit Kühlmitteln (26) zum Kühlen der ersten Bahn (8) an der Schweiß- und Formungsstation (4) versehen sind.

15. Vorrichtung nach einem der Ansprüche 9 bis 14, weiterhin mit einer Formstabilisierstation (6) stromabwärts der Schweiß- und Formungsstation.

## Revendications

1. Procédé de formage de récipients, comprenant le déplacement intermittent d'une première bande (8) et d'une deuxième bande (10) d'un matériau en feuille, le chauffage (2) dudit matériau en feuille, la réunion de ladite première bande (8) et de ladite deuxième bande (10) dudit matériau en feuille le long des contours projetés (12) de récipients (16, 50) de manière à former des poches (12a) délimitées par lesdits contours projetés et des moyens de conduit (44) débouchant dans lesdites poches (12a), lesdits moyens de conduit étant adaptés pour qu'on y injecte un fluide de formage, le formage desdits récipients (16) par dilatation desdites poches (12a) par injection dudit fluide de formage par l'intermédiaire desdits moyens de conduit (44),
***caractérisé en ce que*** ladite dilatation comprend la dilatation de zones extérieures dudit matériau en feuille extérieurement auxdits contours projetés (12), en formant dans chaque récipient une zone marginale (52) de rebord externe où ladite première bande (8) et ladite deuxième bande (10) sont écartées l'une de l'autre, et étant apte à être pincé au niveau de ladite zone marginale (52) pour décoller et séparer lesdits récipients.

2. Procédé selon la revendication 1, dans lequel ladite réunion comprend de plus la formation de moyens de conduit supplémentaires (46) débouchant dans lesdites zones extérieures.

3. Procédé selon la revendication 1 ou 2, dans lequel ledit chauffage comprend de chauffer sélectivement davantage ladite première bande (8) que ladite deuxième bande (10).

4. Procédé selon la revendication 3, dans lequel ledit chauffage sélectif comprend l'interposition de moyens d'écran (25) entre ladite première bande (8) et ladite deuxième bande (10).

5. Procédé selon l'une quelconque des revendications 1 ou 2, dans lequel ledit chauffage comprend le chauffage de ladite deuxième bande (10) après le chauffage de ladite première bande (8).

6. Procédé selon la revendication 5, dans lequel ledit chauffage de ladite deuxième bande (10) a lieu en même temps que ladite réunion.

7. Procédé selon l'une quelconque des revendications 1 à 6, dans lequel ladite dilatation a lieu pendant que ladite première bande (8) est refroidie.

8. Procédé selon l'une quelconque des revendications 1 à 7, et comprenant de plus, après ladite dilatation, la stabilisation desdits récipients (16).

9. Dispositif pour le formage de récipients, comprenant le déplacement intermittent d'une première bande (8) et d'une deuxième bande (10) d'un matériau en feuille à travers un poste de chauffage (2) et à travers un poste de soudage et formage (4) dans lequel des portions en vis-à-vis desdites première bande (8) et deuxième bande (10) sont réunies l'une à l'autre par des moyens de soudage et formage (26, 30) le long des contours projetés (12) de récipients de manière à former des poches (12a) et des moyens de conduit (44) débouchant dans lesdites poches (12a) pour y injecter un fluide de formage et former lesdits récipients (16) par dilatation desdites poches (12a), ***caractérisé en ce que*** lesdits moyens de soudage et formage (26, 30) sont pourvus de moyens de creux pour recevoir des zones dudit matériau en feuille extérieurement auxdits contours projetés (12), dans lesdites zones ladite première bande (8) étant écartée de ladite deuxième bande (10) afin de définir des moyens d'ouverture (52) dudit récipient (50).

10. Dispositif selon la revendication 9, dans lequel lesdits moyens de soudage et formage (26, 30) définissent des moyens de conduit supplémentaires (46) dans ledit matériau en feuille, lesdits moyens de conduit supplémentaires (46) débouchant dans lesdites zones afin de former lesdites zones lorsque ledit fluide de formage est injecté.

11. Dispositif selon la revendication 9 ou 10, dans lequel ledit poste de chauffage (2) comprend des moyens de chauffage sélectifs (24, 25) agencés pour chauffer sélectivement davantage ladite première bande (8) que ladite deuxième bande (10).

12. Dispositif selon la revendication 11, dans lequel lesdits moyens de chauffage sélectifs comprennent des moyens d'écran (25) interposés entre ladite première bande (8) et ladite deuxième bande (10).

13. Dispositif selon l'une quelconque des revendications 9 à 12, et comprenant de plus des moyens de chauffage supplémentaires (30) dans lesdits moyens de soudage et formage (26, 30) dans ledit poste de soudage et formage (4), lesdits moyens de chauffage supplémentaires (30) étant agencés de manière à chauffer ladite deuxième bande (10).

14. Dispositif selon l'une quelconque des revendications 9 à 13, dans lequel lesdits moyens de soudage et formage (26, 30) sont pourvus de moyens de refroidissement (26) pour refroidir ladite première bande (8) au niveau dudit poste de soudage et formage (4).

15. Dispositif selon l'une quelconque des revendications 9 à 14, et comprenant de plus, en aval dudit poste de soudage et formage, un poste (6) de stabilisation de forme.
